Europäisches Patentamt

European Patent Office

Office européen des brevets

(11) Publication number: **0 152 682**
**B1**

# EUROPEAN PATENT SPECIFICATION

(45) Date of publication of patent specification: **12.08.87**

(21) Application number: **84307989.8**

(22) Date of filing: **19.11.84**

(51) Int. Cl.⁴: **B 01 D 53/34**

(54) **Denitration method and device for burning equipment using coal.**

(30) Priority: **10.12.83 JP 189870/83 u**

(43) Date of publication of application:
**28.08.85 Bulletin 85/35**

(45) Publication of the grant of the patent:
**12.08.87 Bulletin 87/33**

(84) Designated Contracting States:
**DE FR GB**

(56) References cited:
**DE-A-2 633 006**
**DE-A-3 100 661**
**US-A-4 115 515**
**US-A-4 218 427**

(73) Proprietor: **ISHIKAWAJIMA-HARIMA JUKOGYO KABUSHIKI KAISHA**
**2-1, Ote-machi 2-chome**
**Chiyoda-ku Tokyo 100 (JP)**

(72) Inventor: **Ikeda, Hideto**
**No. 18-1, Hirakawa-cho Kanagawa-ku**
**Yokohama-shi Kanagawa-ken (JP)**
Inventor: **Sakai, Takeshi**
**No. 6-72, Makuhari-cho**
**Chiba-shi Chiba-ken (JP)**
Inventor: **Ogawa, Keisuke**
**No. 2-16-5, Chiyoda**
**Yotsukado-shi Chiba-ken (JP)**

(74) Representative: **Rees, David Christopher et al**
**Kilburn & Strode 30 John Street**
**London WC1N 2DD (GB)**

Courier Press, Leamington Spa, England.

## Description

The present invention relates to the removal of nitrogen oxides from an exhaust gas stream from a kiln when coal is used as a fuel.

Rotary kilns with preheaters are widely used in clinker burning equipment for the manufacture of cement, in alumina burning equipment for refining aluminium, in limestone burning equipment for the manufacture of iron and steel and in lime mud burning equipment for the manufacture of paper.

In the cement industry, coal has now almost totally replaced heavy oil as a fuel for burning clinker. In converting from heavy oil to coal, it has been observed that whereas a denitration burner disposed within the preheater was very effective for the reduction of $NO_x$ in the exhaust gas when heavy oil was used, the same tended not to be effective at all when powdered coal particles were used.

Prior art burners include those shown in DE—A—2 633 006 and DE—A—3 100 661. The former discloses the features set out in the precharacterising clause of claim 1. The latter is similar, and discloses a burner arranged to inject a reducing agent into the exhaust gases in a riser pipe, near the raw material supply port to the kiln.

In these devices the denitration burner injects powdered coal particles into the kiln exhaust gas so that volatile matter contained in powdered coal particles could react with the small amount of $O_2$ present to produce CO and $H_2$ and consequently the denitration reaction ($2NO+2CO\rightarrow N_2+2CO_2$, etc) might occur. However in the case of normal burning installations using coal, the required denitration tends not to be carried out effectively because the denitration zone is not maintained at the reqired temperature; the time available for the denitration reactions is insufficient; and the CO and $H_2$, which are produced when oxygen in the exhaust gas reacts (burns) with the volatile matter in coal, and which are required for the denitration or reduction reaction, react with the air transporting the powdered coal particles with the result that the CO $H_2$ required for denitration are not present in sufficient quantities.

In view of the above, it is an object of the present invention to provide a denitration method which can considerably suppress the amount of $NO_x$ in the exhaust gas from a kiln with burning equipment using coal.

According to one aspect of the invention, there is provided a method of denitrating the exhaust gas from a rotary kiln by reacting powdered coal with the kiln exhaust gas, comprising injecting powdered coal from a position at or near a raw material supply port to the kiln in a direction which is against that of the kiln exhaust gas; characterised in that the powdered coal is injected into the interior of the kiln using exhaust gas from the kiln, and in that the kiln is coal fired.

According to another aspect of the invention, there is provided a device for denitrating the exhaust gas from buring equipment, the burning equipment comprising a rotary kiln with a raw material supply port, a calcining furnace, a riser pipe connecting the kiln to the calcining furnace, and a preheater system connected to the calcining furnace, and a denitration burner located in the riser pipe for injecting powdered coal particles; characterised in that the denitration burner is arranged to inject the powdered coal particles into the interior of the kiln, using exhaust gas from the kiln, and in that the kiln is coal-fired.

Preferably, the powdered coal, entrained in the air stream is fed to a cyclone where the powdered coal is separated and fed to a stream of exhaust gas from the kiln which stream, together with the entrained powdered coal, is fed to a denitration burner located in a rise pipe connecting the kiln to a calcining furnace.

In a preferred embodiment, the raw material for the kiln is introduced to the preheater system and travels through the preheater system in the opposite direction to that taken by the exhaust gas; whereby the raw material leaving the preheater system is introduced to the riser pipe and the exhaust gas leaving the preheater system is used to feed the powdered coal to the denitration burner.

In an alternative embodiment, the powdered coal is injected into the kiln together with a small amount of air.

As a result of the disposition of the denitration burner powdered coal particles are injected towards the interior of the rotary kiln, and so part of the rotary kiln can be used as a reaction zone so that the reaction temperature and time required for denitration can be positively secured.

The amount of $NO_x$ can therefore be reduced by burning part of fuel (powdered coal particles) required for the burning equipment without increasing the amount of fuel used and without providing catalysts for denitration or any other additional devices.

The invention may be carried into practice in various ways and one embodiment will now be described by way of example with reference to the accompanying drawings, in which:—

Figure 1 is a schematic view of a clinker burning system incorporating a denitration method in accordance with the present invention; and

Figure 2 is a view to an enlarged scale of part of Figure 1.

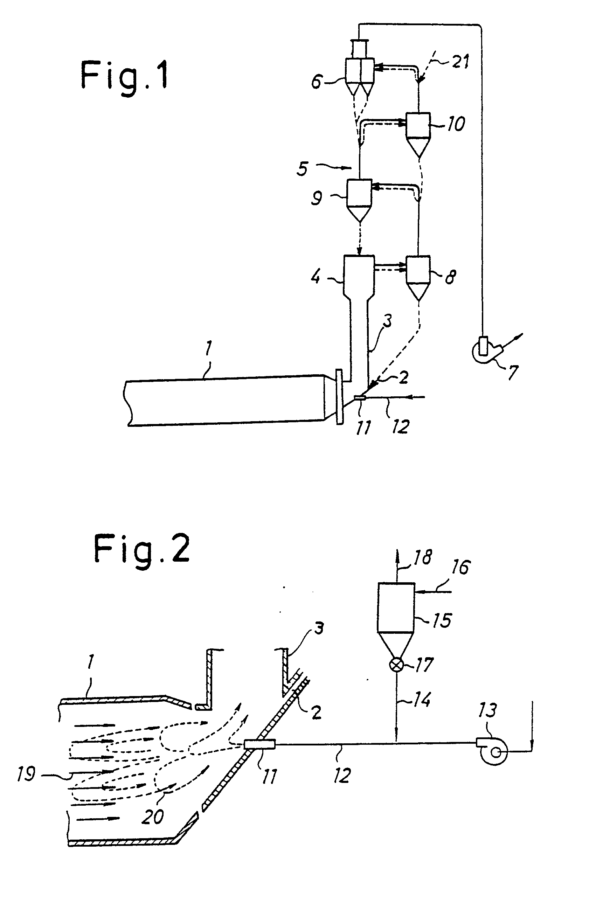

Figure 1 shows schematically a plant for burning clinker for the manufacture of cement. In Figure 1, reference numeral 1 denotes a rotary kiln for burning clinker to which coal in the form of powdered coal particles is supplied from the clinker discharge side (not shown) so that the clinker is burned by the heat of combustion of the coal. A raw material supply port 2 is connected to the rotary kiln 1 through a riser pipe 3 which leads to a calcining furnace 4.

The clinker burning equipment further includes a suspension preheater, generally indicated by reference numeral 5, comprising a plurality of cyclones. The uppermost cyclone 6 of the suspension preheater 5 is connected to a main exhaust fan 7 so that the combustion gases from the rotary kiln 1 are drawn, as indicated by the solid arrows, through the riser pipe 3, the calcining furnace 4, the lowermost cyclone 8 and intermediate cyclones 9 and 10 into the uppermost cyclone 6 and are then exhausted by the main exhaust fan 7.

The raw material to be burned is charged at 21 and, as indicated by the broken arrows, is entrained by the gas discharged from he intermediate cyclone 10 and charged into the uppermost cyclone 6. The raw material discharged from the uppermost cyclone 6 is entrained by the gas flowing from the intermediate cyclone 9 to the intermediate cyclone 10 and charged into the intermediate cyclone 10. The raw material discharged from the intermediate cyclone 10 is entrained by the gas flowing from the lowermost cyclone 8 to the intermediate cyclone 9 and charged into the intermediate cyclone 9. The raw material is thus preheated by the gases and charged from the intermediate cyclone 9 into the calcining furnace 4. Within the calcining furnace, the raw material is calcined by burners (not shown) and entrained by the gas discharged upwardly from the riser pipe 3 and charged into the lowermost cyclone 8. The raw material separated in the lowermost cyclone 8 is charged through the raw material supply port 2 into the rotary kiln 1.

As shown in Figure 2, a denitration burner 11 is located in the riser pipe 3 directed toward the interior of the rotary kiln 1. A fan 13 is connected to the burner 11 via a supply line 12 for supplying exhaust gas from the preheater. A cyclone 15 supplies powdered coal particles to the burner 11 through a line 14 which is connected to the supply line 12. The powdered coal is fed to the cyclone by a line 16 in which the coal is entrained in an air stream. The powdered coal is separated from the air in the cyclone 15 and charged into the supply line 12 through a feeder 17 and the line 14. As a result, the powdered coal particles are charged by the exhaust gas from the fan 13 into the rotary kiln 1 through the denitration burner 11.

If the powdered coal particles were charged into the rotary kiln with the air, part of the charged powdered coal particles would be burned; as a result, the rotary kiln 1 would be locally heated so that the raw material within the rotary kiln 1 would adhere to the walls of the flue and consequently the operation of the rotary kiln 1 would be adversely affected. This is the reason why the powdered coal particles are charged into the rotary kiln 1 by the exhaust gas discharged, for example, from the discharge side of the main exahust fan 7. The air separated from the powdered coal particles in the cyclone 15 is charged into the calcining furnace 4 through a line 18.

If the powdered coal particles are supplied to the denitration burner 11 by means of a powder pump or the like with a small amount of air, the denitration operation is not so adversely affected providing that the proportion of powdered coal is increased slightly.

In the case of the burning of cement clinker, the temperature of exhaust gas within the rotary kiln 1 is generally between 1050 and 1150°C so that a high temperature zone between 1050 and 1150°C is created in the riser pipe 3 and around the raw material supply port 2 of the rotary kiln 1. When the powdered coal particles are injected through the denitration burner 11 against the gas flow indicated by the arrows 19 in Figure 2, they are initially directed into the interior of the rotary kiln 1 and then reversed in direction, as indicated by the arrows 20, by the exhaust gas flows 19. As a result, the powdered coal particles are charged into the riser pipe 3 so that before they reach the calcining furnace 4, the nitrogen oxides $NO_x$ in the exhaust gas are denitrated.

The exhaust gas discharged from the rotary kiln 1 contains 1—2% of $O_2$ which reacts with volatile matter ($C_nH_m$) in the powdered coal to produce the CO and $H_2$ required for denitration. Thus, the denitration process can take place. The denitration reaction time is dependent upon the reaction temperature and is of the order of 0.3—0.1 seconds. In the embodiment described, the temperature in the rotary kiln 1 and the riser pipe 3 is maintained higher than 1000°C and the powdered coal particles flow as indicated by the arrows 20 so that the residence time is increased and consequently a sufficiently long reaction time can be ensured. As a result, about 80% of $NO_x$ in the exhaust gas discharged from the rotary kiln 1 can be denitrated.

The components such as C, CO, $H_2$, etc. which have not been burned in the riser pipe 3 are completely burned in the calcining furnace 4.

The heat obtained by the combustion of powdered coal particles is all used in the burning equipment so that no heat loss will occur.

**Claims**

1. A method of denitrating the exhaust gas from a rotary kiln by reacting powdered coal with the kiln exhaust gas, comprising injecting powdered coal from a position at or near a raw material supply port (2) to the kiln (1) in a direction which is against that of the kiln exhaust gas; characterised in that the powdered coal is injected into the interior of the kiln using exhaust gas from the kiln and in that the kiln is coal-fired.

2. A method as claimed in claim 1, characterised in that the powdered coal, entrained in an air stream (16), is fed to a cyclone (15) where the powdered coal is separated and fed to a stream (12) of exhaust gas from the kiln (1) which stream, together with the entrained powdered coal is fed to a denitration burner (11) located in a riser pipe (3) connecting the kiln (1) to a calcining furnace (4).

3. A method as claimed in claim 2, characterised in that a suspension preheater system (5) is connected to the calcining furnace (4), and the raw material for the kiln (1) is introduced (21) to the preheater system (5) and travels through the preheater system in the opposite direction to that taken by the exhaust gas; whereby the raw material leaving the preheater system is introduced (2) to the riser pipe (3) and the exhaust gas leaving the preheater system is used to feed the powdered coal to the denitration burner (11).

4. A method according to claim 1, characterised in that the powdered coal is injected into the kiln together with a small amount of air.

5. A device for denitrating the exhaust gas from burning equipment, the burning equipment comprising a rotary kiln (1) with a raw material supply port (2), a calcining furnace (4), a riser pipe (3) connecting the kiln (1) to the calcining furnace, and a preheater system (5) connected to the calcining furnace (4), and a denitration burner (11) located in the riser pipe (3) for injecting powdered coal particles characterised in that the denitration burner (11) is arranged to inject the powdered coal particles into the interior of the kiln (1), using exhaust gas from the kiln, and in that the kiln is coal-fired.

6. A device as claimed in claim 5, characterised by an exhaust gas line (12) for supplying exhaust gas discharged from the suspension preheater system (5) to the denitration burner (11), and a line (14) supplying powdered coal to the exhaust gas line (12).

7. A device as claimed in claim 6, characterised by a cyclone (15) to which the powdered coal is fed, entrained in the air stream (16) and in which the powdered coal is separated from the air prior to being supplied to the exhaust gas line (12).

8. A device as claimd in claim 5, characterised by an air line connected to the burner (11) for transporting the powdered coal to the denitration burner (11).

## Patentansprüche

1. Verfahren zur Entstickung des Abgases eines Drehofens durch Reaktion pulverisierter Kohle mit dem Ofenabgas, wobei pulverisierte Kohle von einer Position an oder in der Nähe einer Rohmaterialzufuhröffnung (12) in den Ofen (1) in einer Richtung eingeblasen wird, die zu der des Ofenabgases entgegengesetzt ist, dadurch gekennzeichnet, dass die pulverisierte Kohle in das Innere des Ofens eingeblasen wird, wobei Abgas vom Ofen verwendet wird und der Ofen kohlebefeuert ist.

2. Verfahren nach Anspruch 1, dadurch gekennzeichnet, dass die pulverisiete Kohle, die in einen Luftstrom (16) eingeladen ist, in einen Zyklon eingegeben wird, in dem die pulverisierte Kohle getrennt und in einen Strom (12) von Abgasen des Ofens (1) eingeladen wird, wobei der Strom gemeinsam mit der eingeladenen pulverisierten Kohle in einen Entstickungsbrenner (1) eingebracht wird, der in einem Steigrohr (3) angeordnet ist, das den Ofen (1) mit einem Kalzinierofen (4) verbindet.

3. Verfahren nach Anspruch 2, dadurch gekennzeichnet, dass mit dem Kalzinierofen (4) ein Suspensionsvorwärmersystem (5) verbunden ist, wobei das Rohmaterial vom Ofen (1) in das Vorwärmersystem eingeleitet wird und durch das Vorwärmersystem in einer Richtung durchströmt, die zur der des Abgases entgegengesetzt ist, wodurch das das Vorwärmersystem verlassende Rohmaterial in das Steigrohr (3) eingeleitet und das das Vorwärmersystem verlassende Abgas zum Einleiten der pulverisierten Kohle in den Entstickungsbrenner (11) verwindet wird.

4. Verfahren nach Anspruch 1, dadurch genennzeichnet, dass die pulverisierte Kohle gemeinsam mit einer kleinen Luftmenge in den Ofen eingeblasen wird.

5. Vorrichtung zur Entstickung des Abgases einer Brenneinrichtung, wobei die Brenneinrichtung einen Drehofen (1) mit einer Rohmaterialzufuhröffnung (2), einen Kalzinierofen (4), ein den Ofen (1) mit dem Kalzinierofen (4) verbindendes Steigrohr (3), ein mit dem Kalzinierofen (4) verbundenes Vorwärmersystem (5), und einen Entstickungsbrenner (11) aufweist, der zum Einblasen pulverisierter Kohleteilchen in Steigrohr angeordnet ist, dadurch gekennzeichnet, dass der Entstickungsbrenner (11) zum Einblasen pulverisierter Kohleteilchen in das Innere des Ofens (1) vorgesehen ist, wozu Ofenabgas verwendet wird, und dass der Ofen (1) kohlebefeuert ist.

6. Vorrichtung nach Anspruch 5, gekennzeichnet durch eine Abgasleitung (12) zur Zufuhr von aus dem Suspensionsvorwärmersystem (5) entladenem Abgas an den Entstickungsbrenner (11), und eine Leitung (14) zur Zufuhr pulverisierter Kohle zur Abgasleitung (12).

7. Vorrichtung nach Anspruch 6, gekennzeichnet durch einen Zylkon (15), in den die in einem Luftstrom (6) enthaltene pulverisierte Kohle eingebracht wird, und in welchem die pulverisierte Kohle von der Luft getrennt wird, bevor sie zur Abgasleitung (12) geleitet wird.

8. Vorrichtung nach Anspruch 5, gekennzeichnet durch eine Luftleitung, die zum Transport der pulverisierten Kohlen zum Entstickungsbrenner (11) mit dem Brenner (11) verbunden ist.

## Revendications

1. Procédé de dénitrification des gaz de rejet sortant d'un four rotatif, par réaction de charbon en poudre avec les gaz de rejet du four, consistant à injecter du charbon en poudre à partir d'une position située à l'endroit ou au voisinage d'un orifice d'alimentation en matériau brut (2) du four (1), dans une direction opposée à celle du gaz de rejet du four; procédé caractérisé en ce que le charbon en poudre est injecté à l'intérieur du four en utilisant les gaz de rejet sortant du four, et en ce que le four est chauffé au charbon.

2. Procédé selon la revendication 1, caractérisé en ce que le charbon en poudre, entraîné dans un courant d'air (16), est envoyé à un cyclone (15) dans lequel le charbon en poudre est séparé et envoyé dans un courant (12) de gaz de rejet sortant du four (1), ce courant étant envoyé, avec le charbon en poudre entraîné, dans un brûleur de dénitrification (11) placé dans une colonne montante (3) reliant le four (1) à un four de calcination (4).

3. Procédé selon la revendication 2, caractérisé en ce qu'un système de préchauffage en suspension (5) est relié au four de calcination (4), et en ce que le matériau brut d'alimentation du four (1) est introduit en (21) dans le système de préchauffage (5) et traverse ce système de préchauffage dans une direction opposée à celle prise par les gaz de rejet; de sorte que le matériau brut quittant le système de préchauffage est introduit en (2) dans la colonne montante (3), et que les gaz de rejet quittant le système de préchauffage sont utilisés pour envoyer le charbon en poudre dans le brûleur de dénitrification (11).

4. Procédé selon la revendication 1, caractérisé en ce que le charbon en poudre est injecté dans le four en même temps qu'une petite quantité d'air.

5. Dispositif pour dénitrifier les gaz de rejet sortant d'un équipement de chauffe, cet équipement de chauffe comprenant un four rotatif (1) muni d'un orifice d'alimentation en matériau brut (2), un four de calcination (4), une colonne montante (3) reliant le four (1) au four de calcination, et un système de préchauffage (5) relié au four de calcination (4), ainsi qu'un brûleur de dénitrification (11) placé dans la colonne montante (3) pour injecter les particules de charbon en poudre; dispositif caractérisé en ce que le brûleur de dénitrification (11) est disposé de manière à injecter les particules de charbon en poudre à l'intérieur du four (1), en utilisant les gaz de rejet sortant du four, et en ce que le four est chauffé au charbon.

6. Dispositif selon la revendication 5, caractérisé en ce qu'il comprend une conduite de gaz de reject (12) destinée à envoyer les gaz de rejet sortant du système de préchauffage en suspension (5), dans le brûleur de dénitrification (11), et une conduite (14) envoyant la charbon en poudre dans la conduite de gaz de rejet (12).

7. Dispositif selon la revendication 6, caractérisé en ce qu'il comprend un cyclone (15) vers lequel le charbon en poudre est envoyé et entraîné dans un courant d'air (6) et dans lequel le charbon en poudre est séparé de l'air avant d'être envoyé à la conduite de gaz de rejet (12).

8. Dispositif selon la revendication 5, caractérisé en ce qu'il comprend une conduite d'air reliée au brûleur (11) pour transporter le charbon en poudre vers le brûleur de dénitrification (11).

# Fig.1

# Fig.2